# EUROPÄISCHE PATENTANMELDUNG

(11) **EP 4 793 665 A1**
(43) Veröffentlichungstag der Anmeldung: **19.08.2026**
(21) Anmeldenummer: 26155375.4
(22) Anmeldetag: 30.01.2026
(51) Int. Cl.: G01S 17/42, G01S 7/497, B66C 13/46

(54) **VERFAHREN ZUM KALIBRIEREN EINES LIDAR-SENSORS**

(30) Priorität: 13.02.2025 DE 102025105323
(71) Anmelder: SICK AG, 79183 Waldkirch (DE)
(72) Erfinder: ZACHERT, Fabio, 22145 Stapelfeld (DE); VON BERGNER, Alexander, 22967 Tremsbüttel (DE)
(74) Vertreter: Manitz Finsterwald Patent- und Rechtsanwaltspartnerschaft mbB

(57) **Zusammenfassung**

Ein Verfahren zum Kalibrieren eines LiDAR-Sensors, der oberhalb eines Überwachungsbereichs an einem Trägersystem angeordnet ist und dazu ausgebildet ist, innerhalb mehrerer zueinander versetzter Abtastebenen Objekte zu erfassen, umfasst die Schritte, dass ein Kalibrierungskörper bereitgestellt wird, der eine erste Kante und eine zweite Kante aufweist, die in einem Eckpunkt zusammenlaufen, dass der Kalibrierungskörper derart angeordnet wird, dass sich der Eckpunkt von oben betrachtet an einer Referenzposition befindet, dass die Positionen der ersten Kante innerhalb zweier Abtastebenen bestimmt werden und die Positionen der zweiten Kante innerhalb zweier Abtastebenen bestimmt werden, dass anhand der so bestimmten Positionen der Verlauf der ersten Kante und der Verlauf der zweiten Kante ermittelt wird, dass der Schnittpunkt der ersten Kante und der zweiten Kante in einem bezüglich des Trägersystems ortsfesten Koordinatensystem ermittelt wird, und dass anhand des ermittelten Schnittpunkts die Referenzposition in dem bezüglich des Trägersystems ortsfesten Koordinatensystem ermittelt wird.

## Beschreibung

Die Erfindung betrifft ein Verfahren zum Kalibrieren eines LiDAR-Sensors, der oberhalb eines länglichen Überwachungsbereichs an einem Trägersystem angeordnet ist und dazu ausgebildet ist, innerhalb mehrerer zueinander versetzter Abtastebenen mittels eines Lichtlaufzeitverfahrens Objekte zu erfassen, wobei sich die Abtastebenen zumindest im Wesentlichen parallel zu einer Längsachse des Überwachungsbereichs erstrecken.

LiDAR-Sensoren (LiDAR für Light Detection And Ranging) werden in vielfältiger Weise zur Bewältigung von Sicherheitsaufgaben herangezogen. Beispielsweise müssen Container-Verladeanlagen in Container-Terminals zuverlässig abgesichert werden. In solch einem Container-Terminal werden Intermodal-Kräne eingesetzt, um Container auf und von Transportfahrzeugen zu verladen. Unter einem Intermodal-Kran ist eine spezielle Ausführung eines Krans zu verstehen, der bei einer mehrgliedrigen Transport- oder Lieferkette die unterschiedlichen Verkehrsträger be- und entlädt, indem er beispielsweise Container von einem Transportfahrzeug auf ein anderes Transportfahrzeug, beispielsweise von einem LKW auf einen Containerzug, manövriert. Ein solcher Containerkran wird durch eine Kransteuerung bewegt, wobei die Aufnahme des Containers und die Bewegung des Containers zu seinem Bestimmungsort bevorzugt automatisiert ablaufen, zumindest teilautomatisiert. Ein Containerkran kann als schienengebundener Portalkran (RMG, Rail Mounted Gantry) oder als gummibereifter Portalkran (RTG; Rubber Tyred Gantry) ausgebildet sein.

Zum Auf- und Entladen eines Transportfahrzeuges überspannt der Containerkran ein als Arbeitsfläche ausgebildetes Gebiet, in welches die Transportfahrzeuge entlang von Transportfahrzeugspuren fahren, um sich unter den Containerkranbereich zum Be- und Entladen zu positionieren. Zwischen solchen Ladebereichen sind Zugangsbereiche ausgebildet, damit insbesondere Personen die Be- und Entladevorgänge unterstützen können.

Da die Bewegung eines Containerkrans bevorzugt zumindest teilweise automatisiert abläuft und ein Containerkranführer aufgrund der räumlichen Ausdehnung der Arbeitsfläche nur ein eingeschränktes Sichtfeld zur Verfügung hat, ist es notwendig, die Ladevorgänge durch Sensoren zu überwachen. Beispielsweise um sicherzustellen, dass wenn der Container mit dem Kran über den Zugangsbereich bewegt wird, sich keine Personen in diesem Bereich aufhalten, insbesondere nicht im Bereich unterhalb des Containers.

Die Zugangsbereiche können mittels wenigstens eines wie vorstehend beschriebenen LiDAR-Sensors überwacht werden, wobei sie dann Überwachungsbereiche bilden. Insbesondere kann oberhalb jedes Zugangsbereichs ein LiDAR-Sensor mittig angeordnet sein, beispielsweise an einem Trägerelement, das sich über die Arbeitsfläche hinweg erstreckt. Der Sensor kann dabei mit einer Personen-Erkennungseinheit in Verbindung stehen, die aus der Messpunktwolke die Arbeitsfläche und die Transportfahrzeuge identifiziert. Gibt es innerhalb der Messpunktwolke einen Messpunkt, der mehr als 0,5 m über der identifizierten Arbeitsfläche liegt, wird von der Personen-Erkennungseinheit ein Person-Wahrscheinlich-Signal ausgegeben, so dass eine Sicherheitssteuerung die Kranbewegung verlangsamt oder stoppt.

Eine Kalibrierung von LiDAR-Sensoren der genannten Art muss insbesondere deshalb durchgeführt werden, weil eine möglichst exakte Zuordnung des Überwachungsbereichs zu den Messdaten des Sensors von großer Bedeutung für Sicherheitsanwendungen ist. In der Praxis können beispielsweise die Abtastebenen - ungeachtet ihrer grundsätzlich im Wesentlichen parallelen Ausrichtung zur Längsachse - einen geringfügigen Winkelversatz zur Ausrichtung des Überwachungsbereichs aufweisen. Ebenso kann es sein, dass der Sensor nicht exakt mittig oberhalb des Überwachungsbereichs positioniert ist. Solche Abweichungen sollten durch eine Kalibrierung kompensiert werden, um eine zuverlässige Auswertung der Messdaten sicherzustellen.

Bei der Kalibrierung kann zum Beispiel die Lage einer Bodenmarkierung relativ zum Kran manuell vermessen und mit der Erkennung in den Messdaten abgeglichen werden. Die Bereitstellung von sensorisch gut erfassbaren Bodenmarkierungen ist jedoch aufwändig. Außerdem ist die Erkennung von der Sensor-Auflösung abhängig. Insbesondere ist es problematisch, dass die Ortsauflösung von mehrlagigen LiDAR-Sensoren zwar innerhalb der Abtastebenen relativ hoch, quer zu der Längsachse jedoch durch den gegenseitigen Abstand der Abtastebenen fest vorgegeben und im Allgemeinen relativ gering ist. Eine Erhöhung der Anzahl der Abtastebenen wäre mit einem unverhältnismäßig hohen Kostenaufwand verbunden.

Es ist eine Aufgabe der Erfindung, ein Kalibrierverfahren anzugeben, das die genannten Abweichungen kompensiert, schnell und einfach durchführbar ist und dennoch eine hohe Präzision aufweist.

Die Lösung der Aufgabe erfolgt durch ein Verfahren mit den Merkmalen des Anspruchs 1.

Ein erfindungsgemäßes Verfahren umfasst die Schritte, dass
(i) wenigstens ein Kalibrierungskörper bereitgestellt wird, der eine erste Kante und eine zweite Kante aufweist, die in einem Eckpunkt zusammenlaufen,
(ii) der wenigstens eine Kalibrierungskörper derart in dem Überwachungsbereich angeordnet wird, dass sich der Eckpunkt von oben betrachtet an einer Referenzposition des Überwachungsbereichs befindet,
(iii) mittels des LiDAR-Sensors die Positionen der ersten Kante innerhalb wenigstens zweier Abtastebenen bestimmt werden und die Positionen der zweiten Kante innerhalb wenigstens zweier Abtastebenen bestimmt werden,
(iv) anhand der so bestimmten Positionen der Verlauf der ersten Kante und der Verlauf der zweiten Kante ermittelt wird,
(v) anhand des Verlaufs der ersten Kante und des Verlaufs der zweiten Kante der Schnittpunkt der ersten Kante und der zweiten Kante in einem bezüglich des Trägersystems ortsfesten Koordinatensystem ermittelt wird, und
(vi) anhand des ermittelten Schnittpunkts die Referenzposition des Überwachungsbereichs in dem bezüglich des Trägersystems ortsfesten Koordinatensystem ermittelt wird.

Da die Lokalisierung des Kalibrierungskörpers in den Messdaten anhand des Kantenschnittpunkts erfolgt, muss der Kalibrierungskörper nicht mit besonderen Erkennungsmerkmalen ausgestattet sein. Es reicht aus, dass der Kalibrierungskörper zwei zu einem Eck zusammenlaufende Kanten aufweist. Dies ist bei vielen bekannten Gegenständen der Fall. Vorzugsweise ist der Kalibrierungskörper ein tragbares Objekt, damit das Positionieren des Kalibrierungskörpers im Überwachungsbereich in einfacher Weise manuell vorgenommen werden kann. Aufgrund des geradlinigen Verlaufs der Kanten kann die Lage des Schnittpunkts mittels Extrapolation relativ exakt ermittelt werden, auch wenn sich der Schnittpunkt zwischen zwei Abtastebenen befindet und der Abstand zwischen den Abtastebenen relativ groß ist. Die geringe Ortsauflösung des LiDAR-Sensors quer zu den Abtastebenen ist also bei einem erfindungsgemäßen Kalibrierungsverfahren nicht problematisch. Sobald der Schnittpunkt im Bezugssystem des LiDAR-Sensors bekannt ist, kann er mit der Referenzposition im Überwachungsbereich gleichgesetzt werden, wodurch eine feste Beziehung zwischen dem Koordinatensystem des LiDAR-Sensors und dem Weltkoordinatensystem hergestellt ist.

Ein Vorteil des erfindungsgemäßen Verfahrens besteht darin, dass die genaue Größe des Kalibrierungskörpers nicht bekannt sein muss. Aufwändige Vermessungen des Kalibrierungskörpers erübrigen sich somit. Es kann auch ein zufällig vorhandenes Objekt als Kalibrierungskörper genutzt werden.

Bei einer vorteilhaften Ausgestaltung des Verfahrens wird die Referenzposition auf der Längsachse gewählt, welche besonders leicht aufzufinden bzw. auszumessen ist. Weiterhin ist es bevorzugt, wenn die erste Kante und die zweite Kante des Kalibrierungskörpers in einem rechten Winkel zusammenlaufen.

Gemäß einer Ausführungsform der Erfindung werden wenigstens zwei Kalibrierungskörper bereitgestellt, die jeweilige in einem Eckpunkt zusammenlaufende Kanten aufweisen, wobei die wenigstens zwei Kalibrierungskörper derart in dem Überwachungsbereich angeordnet werden, dass sich die Eckpunkte von oben betrachtet an unterschiedlichen Referenzpositionen des Überwachungsbereichs befinden, und wobei die Schritte (iii) bis (vi) für alle Kalibrierungskörper durchgeführt werden. Durch das Festlegen zweier verschiedener Referenzpositionen im Koordinatensystem des LiDAR-Sensors sind die Position und die Ausrichtung des Überwachungsbereichs innerhalb der Bodenebene aus Sicht des LiDAR-Sensors vollständig und eindeutig festgelegt. Die Kalibrierung kann auch anhand von mehr als zwei Kalibrierungskörpern durchgeführt werden, um zum Beispiel durch Mittelwertbildung die Genauigkeit zu erhöhen.

Eine weitere Ausführungsform der Erfindung sieht vor, dass anhand der ermittelten Schnittpunkte die Lage einer Referenzlinie des Überwachungsbereichs, vorzugsweise der Längsachse oder Mittellinie des Überwachungsbereichs, in dem bezüglich des Trägersystems ortsfesten Koordinatensystem ermittelt wird. Die Mittellinie des Überwachungsbereichs ist relativ leicht zu finden, selbst wenn keine entsprechende Markierung vorhanden ist. Beispielsweise kann die Mitte des Überwachungsbereichs mittels eines Maßbands bestimmt werden.

Es muss nicht zwingend eine Vielzahl von Punkten der Referenzlinie im Koordinatensystem des Trägersystems ermittelt werden. Es reicht vielmehr, eine Parallelverschiebung und/oder eine Verkippung der Referenzlinie gegenüber einer entsprechenden Linie des Sensor-Koordinatensystems zu ermitteln.

Bevorzugt wird im Schritt (ii) der wenigstens eine Kalibrierungskörper derart in dem Überwachungsbereich angeordnet, dass die Kanten von oben betrachtet schräg zur Längsachse des Überwachungsbereichs verlaufen. Es ist dann sichergestellt, dass beide Kanten durch eine ausreichende Anzahl von Abtastebenen erfasst werden können.

Vorzugsweise wird im Schritt (i) wenigstens ein quaderförmiger Kalibrierungskörper bereitgestellt. Ein quaderförmiger Kalibrierungskörper ist leicht zu beschaffen und handzuhaben. Beispielsweise kann ein Verpackungskarton als Kalibrierungskörper verwendet werden.

Gemäß einer weiteren Ausführungsform der Erfindung wird im Schritt (i) wenigstens ein Kalibrierungskörper bereitgestellt, der zumindest in einem Bereich einen L-förmigen Querschnitt aufweist, und der wenigstens eine Kalibrierungskörper wird im Schritt (ii) derart angeordnet, dass die L-Form von oben betrachtet erkennbar ist. Die beiden Kanten sind in diesem Fall durch die vorderen Ränder der Schenkel gebildet. L-förmige Kalibrierungskörper sind besonders leicht und platzsparend.

Bevorzugt wird im Schritt (i) wenigstens ein Kalibrierungskörper bereitgestellt, der eine Länge von wenigstens 50 cm, eine Breite von wenigstens 50 cm und/oder eine Höhe von wenigstens 20 cm aufweist. Die entsprechenden Kantenlängen sind bei vielen Anwendungen günstig, um eine ausreichende Abdeckung der Kanten durch die Abtastebenen sicherzustellen. Eine Höhe von wenigstens 20 cm ist insofern vorteilhaft, als sich der abgestellte Kalibrierungskörper bei dieser Ausgestaltung ausreichend vom Boden abhebt, um vom LiDAR-Sensor zuverlässig erkannt zu werden.

Die Erfindung betrifft auch eine Vorrichtung zum Überwachen eines länglichen Überwachungsbereichs, mit einem Trägersystem und wenigstens einem LiDAR-Sensor, der oberhalb des Überwachungsbereichs an dem Trägersystem angeordnet ist und dazu ausgebildet ist, innerhalb mehrerer zueinander versetzter Abtastebenen mittels eines Lichtlaufzeitverfahrens Objekte zu erfassen, wobei sich die Abtastebenen zumindest im Wesentlichen parallel zu einer Längsachse des Überwachungsbereichs erstrecken.

Die Abtastebenen können - ungeachtet ihrer grundsätzlich im Wesentlichen parallelen Ausrichtung zur Längsachse und der grundsätzlich mittigen Anordnung des LiDAR-Sensors oberhalb des Überwachungsbereichs - geringfügige Abweichungen zur vorgegebenen Positionierung aufweisen. Solche Abweichungen sollten kompensiert werden, um eine zuverlässige Auswertung der Messdaten sicherzustellen. Aufwändige Vermessungsarbeiten und die Bereitstellung spezieller Bodenmarkierungen sind jedoch unerwünscht.

Erfindungsgemäß umfasst die Vorrichtung eine elektronische Steuereinrichtung, die mit dem wenigstens einen LiDAR-Sensor in Signalverbindung steht und dazu ausgebildet ist,
die Verläufe von zwei in einem Eckpunkt zusammenlaufenden Kanten eines im Überwachungsbereich angeordneten Kalibrierungskörpers anhand der mittels des LiDAR-Sensors bestimmten Positionen der Kanten innerhalb wenigstens zweier Abtastebenen zu ermitteln,
anhand der ermittelten Verläufe den Schnittpunkt der Kanten in einem bezüglich des Trägersystems ortsfesten Koordinatensystem zu ermitteln, und anhand des ermittelten Schnittpunkts eine Referenzposition des Überwachungsbereichs in dem bezüglich des Trägersystems ortsfesten Koordinatensystem zu ermitteln.

Da die Lokalisierung des Kalibrierungskörpers in den Messdaten anhand des Kantenschnittpunkts erfolgt, muss der Kalibrierungskörper nicht mit besonderen Erkennungsmerkmalen wie Reflektoren ausgestattet sein. Außerdem ist das Platzieren des Eckpunkts auf der Referenzposition auf schnelle und einfache Weise möglich.

Bei dem Trägersystem kann es sich um das Basisgestell eines Portalkrans, insbesondere eines Intermodal-Krans, handeln.

Der Überwachungsbereich kann ein rechteckiger Zugangsstreifen zwischen zwei Ladebereichen sein. Eine Rechteckform des Überwachungsbereichs erleichtert die Auswertung der Sensorsignale und vermeidet Abschattungen.

Die Abtastebenen können anwendungsabhängig einen einfach zu realisierenden gleichmäßigen oder einen ungleichmäßigen Winkelversatz zueinander aufweisen. Durch einen geringeren Winkelversatz der Abtastebenen in ausgewählten, zum Beispiel besonders kritischen, Bereichen kann in diesen zum Beispiel ein höhere Kalibrierungsgenauigkeit erreicht werden.

Weiterbildungen der Erfindung sind auch den abhängigen Ansprüchen, der Beschreibung sowie den beigefügten Zeichnungen zu entnehmen.

Die Erfindung wird nachfolgend beispielhaft unter Bezugnahme auf die Zeichnungen beschrieben.
- Fig. 1: zeigt eine Container-Verladeanlage mit einer erfindungsgemäßen Vorrichtung zum Überwachen eines länglichen Überwachungsbereichs der Container-Verladeanlage, wobei zwei Kalibrierungskörper in dem Überwachungsbereich angeordnet sind.
- Fig. 2: zeigt die Anordnung gemäß Fig. 1 mit alternativ gestalteten Kalibrierungskörpern.
- Fig. 3: zeigt schematisch eine Steuereinrichtung zum Steuern der in Fig. 1 dargestellten Container-Verladeanlage.

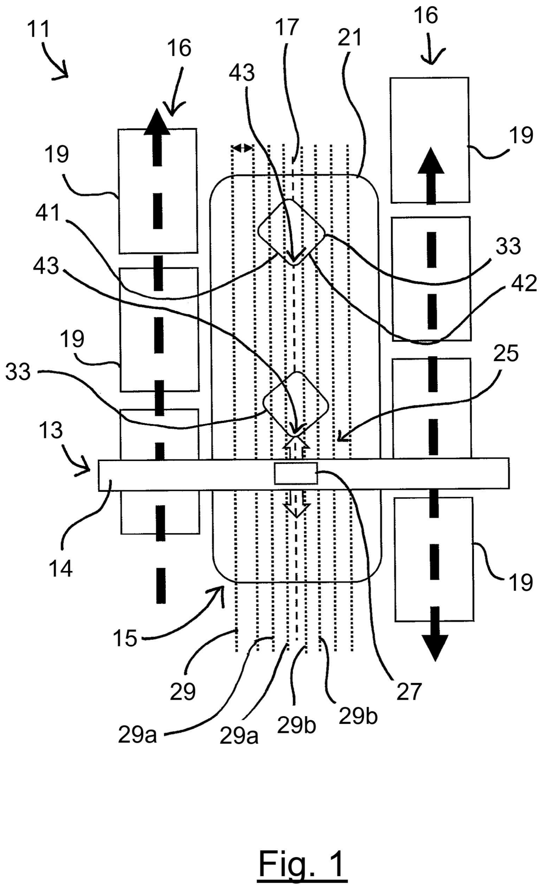

Die in Fig. 1 vereinfacht von oben gezeigte Container-Verladeanlage 11 umfasst einen Containerkran 13, der ein Trägersystem 14 aufweist und sich über eine Arbeitsfläche 15 erstreckt. Die Arbeitsfläche 15 umfasst zwei längliche und parallel zueinander angeordnete Ladebereiche 16, die durch einen ebenfalls länglichen und parallel zu den Ladebereichen 16 verlaufenden Zugangsbereich 21 getrennt sind. Von dem Zugangsbereich 21 aus können Personen die angrenzenden Ladebereiche 16 kontrollieren. Auf den Ladebereichen 16 befinden sich in Fig. 1 nicht dargestellte Transportfahrzeuge zum Be- und Entladen, beispielsweise LKWs, Eisenbahnwagen oder Schiffe. Der Zugangsbereich 21 weist eine Mittellinie bzw. Längsachse 17 auf. Der Containerkran 13 weist ferner in an sich bekannter Weise eine in Fig. 1 nicht dargestellte Laufkatze auf, die an dem Trägersystem 14 quer zur Längsachse 17 verfahrbar befestigt ist. An der Laufkatze kann durch ein Hebezeug (nicht gezeigt) ein Container 19 zum Be- und Entladen von Transportfahrzeugen befestigt werden. Zu diesem Zweck kann sich das Trägersystem 14 parallel zur Längsachse 17 verschieben.

Die Container-Verladeanlage 11 umfasst eine erfindungsgemäße Vorrichtung 25 zum Überwachen des Zugangsbereichs 21. Insofern stellt der Zugangsbereich 21 einen Überwachungsbereich dar.

Die Vorrichtung 25 zum Überwachen des Zugangsbereichs 21 weist einen LiDAR-Sensor 27 auf, der oberhalb des Zugangsbereichs 21 an dem Trägersystem 14 angeordnet ist, vorzugsweise wie dargestellt mittig. Der LiDAR-Sensor 27 ist nach unten messend ausgerichtet und dazu ausgebildet, innerhalb mehrerer zueinander versetzter Abtastebenen 29 mittels eines Lichtlaufzeitverfahrens Objekte zu erfassen. Das heißt, der LiDAR-Sensor 27 ist ein Mehrlagen-Sensor und für eine dreidimensionale Erfassung ausgelegt. Die in Fig. 1 als Linien erkennbaren Abtastebenen 29 sind fächerförmig angeordnet und erstrecken sich zumindest im Wesentlichen parallel zur Längsachse 17.

Es versteht sich, dass grundsätzlich auch mehrere LiDAR-Sensoren 27 an dem Trägersystem 14 angeordnet sein können.

Die hier dargestellte Ausgestaltung eines erfindungsgemäßen Verfahrens zum Kalibrieren des LiDAR-Sensors 27 sieht vor, dass zwei Kalibrierungskörper 33 im Zugangsbereich 21 abgestellt werden. Bei den Kalibrierungskörpern 33 kann es sich um tragbare quaderförmige Objekte wie zum Beispiel Verpackungskartons handeln. Jeder Kalibrierungskörper 33 ist in der Draufsicht rechteckig und weist dementsprechend eine erste Kante 41 und eine zweite Kante 42 auf, die in einem Eckpunkt 43 zusammenlaufen. Die Rechteckform und der Eckpunkt sind nicht im mathematisch strengen Sinn zu verstehen. Insbesondere können wie dargestellt abgerundete Ecken vorhanden sein. Der Kalibrierungskörper 33 wird insbesondere derart ausgewählt, dass die erste und die zweite Kante jeweils so lang sind, dass sie bei entsprechender Anordnung des Kalibrierungskörpers 33 jeweils von wenigstens zwei Abtastebenen 29 erfasst werden.

Die Kalibrierungskörper 33 werden für den Kalibrierungsvorgang in einem Abstand voneinander derart in dem Zugangsbereich 21 angeordnet, dass sich jeweils ein Eckpunkt 43 von oben betrachtet auf der Längsachse 17 des Zugangsbereichs 21 befindet. Falls nicht zum Beispiel eine Markierung vorhanden ist, kann die Position der Längsachse 17 mit einem Maßband ausgemessen werden. Jeder Kalibrierungskörper 33 wird so ausgerichtet, dass die erste Kante 41 und die zweite Kante 42 schräg zur Längsachse 17 verlaufen.

Nachdem die Kalibrierungskörper 33 in dieser Weise positioniert und ausgerichtet sind, werden mittels des LiDAR-Sensors 27 die Positionen der ersten Kante 41 innerhalb derjenigen Abtastebenen 29 bestimmt, die durch die erste Kante 41 verlaufen. Bei dem dargestellten Ausführungsbeispiel sind das zwei Abtastebenen 29a. Ebenso werden die Positionen der zweiten Kante 42 innerhalb zweier anderer Abtastebenen 29b bestimmt.

Beruhend auf den so bestimmten Positionen werden die geradlinigen Verläufe der ersten Kante 41 und der zweiten Kante 42 ermittelt. Anhand der geradlinigen Verläufe wird der Schnittpunkt der ersten Kante 41 mit der zweiten Kante 42 in einem bezüglich des Trägersystems 14 ortsfesten Koordinatensystem, das heißt im Bezugsystem des LiDAR-Sensors 27, ermittelt. Da sich jeder entsprechende Eckpunkt 43 von oben betrachtet auf der Längsachse 17 befindet, gibt der Schnittpunkt die Position der Längsachse 17 im Bezugssystem des LiDAR-Sensors 27 an. Demgemäß wird zur Kalibrierung die Position der Längsachse 17 im Koordinatensystem des Trägersystems 14 über die Positionen der Schnittpunkte festgelegt. Für eine Mittelwertbildung können auch mehr als zwei Kalibrierungskörper 33 verwendet werden. Andererseits kann gegebenenfalls auch ein einzelner Kalibrierungskörper 33 für eine Kalibrierung ausreichend sein, wenn beispielsweise lediglich der Mittelpunkt des Zugangsbereichs 21 ermittelt werden soll.

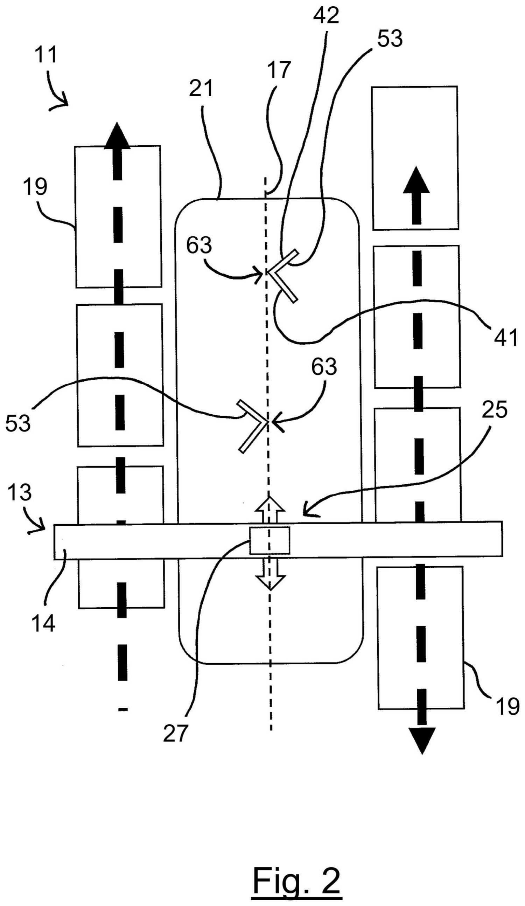

Die Kalibrierungskörper 33 müssen nicht zwingend quaderförmig sein. Fig. 2 zeigt beispielsweise die Container-Verladeanlage 11 unter Verwendung anders ausgestalteter Kalibrierungskörper 53, die jeweils einen L-förmigen Querschnitt aufweisen. Jeder dieser Kalibrierungskörper 53 wird derart angeordnet, dass die L-Form von oben betrachtet erkennbar ist und der durch die L-Spitze definierte Eckpunkt 63 von oben betrachtet auf der Längsachse 17 liegt.

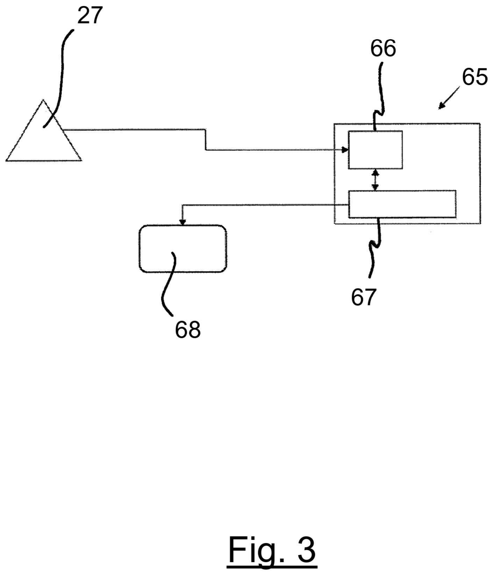

Fig. 3 zeigt schematisch eine Steuereinrichtung 65, die mit dem LiDAR-Sensor 27 in Signalverbindung steht und zum Steuern der in Fig. 1 dargestellten Container-Verladeanlage 11 vorgesehen ist. Die Steuereinrichtung 65 weist eine Empfangseinheit 66 und eine Verarbeitungseinheit 67 auf. Der LiDAR-Sensor 27 sendet bei einem erkannten Objekt ein Feststellungssignal (nicht gezeigt) an die Empfangseinheit 66 der Steuereinrichtung 65. Die Steuereinrichtung 65 überträgt das Feststellungssignal an die Verarbeitungseinheit 67 zur Auswertung. Die Verarbeitungseinheit 67 sendet beispielsweise ein Stoppsignal an die Containerkran-Steuerung 68. Alternativ dazu und/oder ergänzend kann ein Warnsignal an die Containerkran-Steuerung 68 ausgegeben werden. Weiter alternativ kann der LiDAR-Sensor 27 eine relative Position eines Objektes an die Steuereinrichtung 65 übertragen. Die Steuereinrichtung 65 wertet die relative Position des Objektes hinsichtlich eines vorbestimmten Minimalabstandes aus und gibt im Falle einer Unterschreitung des Minimalabstandes ein Warnsignal und/oder ein Stoppsignal an die Containerkran-Steuerung 68 aus. Aufgrund der Kalibrierung ist sichergestellt, dass der zu überwachende Zugangsbereich 21 in der Messpunktwolke des LiDAR-Sensors 27 korrekt definiert ist.

Das erfindungsgemäße Kalibrierungsverfahren ist nicht nur für die Überwachung von Container-Verladeanlagen 11, sondern auch für die Überwachung anderer Einrichtungen wie automatisierten Produktions-, Lager- oder Förderanlagen vorteilhaft einsetzbar.

### Bezugszeichenliste:

- 11: Container-Verladeanlage
- 13: Containerkran
- 14: Trägersystem
- 15: Arbeitsfläche
- 16: Ladebereich
- 17: Längsachse
- 19: Container
- 21: Zugangsbereich
- 25: Überwachungsvorrichtung
- 27: LiDAR-Sensor
- 29: Abtastebene
- 29a: durch erste Kante verlaufende Abtastebene
- 29b: durch zweite Kante verlaufende Abtastebene
- 33: Kalibrierungskörper
- 41: erste Kante
- 42: zweite Kante
- 43: Eckpunkt
- 53: Kalibrierungskörper
- 63: Eckpunkt
- 65: Steuereinrichtung
- 66: Empfangseinheit
- 67: Verarbeitungseinheit
- 68: Containerkran-Steuerung

## Patentansprüche

1. Verfahren zum Kalibrieren eines LiDAR-Sensors (27), der oberhalb eines länglichen Überwachungsbereichs (21) an einem Trägersystem (14) angeordnet ist und dazu ausgebildet ist, innerhalb mehrerer zueinander versetzter Abtastebenen (29) mittels eines Lichtlaufzeitverfahrens Objekte zu erfassen, wobei sich die Abtastebenen (29) zumindest im Wesentlichen parallel zu einer Längsachse (17) des Überwachungsbereichs (21) erstrecken, wobei:
(i) wenigstens ein Kalibrierungskörper (33, 53) bereitgestellt wird, der eine erste Kante (41) und eine zweite Kante (42) aufweist, die in einem Eckpunkt (43, 63) zusammenlaufen,
(ii) der wenigstens eine Kalibrierungskörper (33, 53) derart in dem Überwachungsbereich (21) angeordnet wird, dass sich der Eckpunkt (43, 63) von oben betrachtet an einer Referenzposition des Überwachungsbereichs (21) befindet,
(iii) mittels des LiDAR-Sensors (27) die Positionen der ersten Kante (41) innerhalb wenigstens zweier Abtastebenen (29a) bestimmt werden und die Positionen der zweiten Kante (42) innerhalb wenigstens zweier Abtastebenen (29b) bestimmt werden,
(iv) anhand der so bestimmten Positionen der Verlauf der ersten Kante (41) und der Verlauf der zweiten Kante (42) ermittelt wird,
(v) anhand des Verlaufs der ersten Kante (41) und des Verlaufs der zweiten Kante (42) der Schnittpunkt der ersten Kante (41) und der zweiten Kante (42) in einem bezüglich des Trägersystems (14) ortsfesten Koordinatensystem ermittelt wird, und
(vi) anhand des ermittelten Schnittpunkts die Referenzposition des Überwachungsbereichs (21) in dem bezüglich des Trägersystems (14) ortsfesten Koordinatensystem ermittelt wird.

2. Verfahren nach Anspruch 1,
wobei wenigstens zwei Kalibrierungskörper (33, 53) bereitgestellt werden, die jeweilige in einem Eckpunkt (43, 63) zusammenlaufende Kanten (41, 42) aufweisen, wobei die wenigstens zwei Kalibrierungskörper (33, 53) derart in dem Überwachungsbereich (21) angeordnet werden, dass sich die Eckpunkte (43, 63) von oben betrachtet an unterschiedlichen Referenzpositionen des Überwachungsbereichs (21) befinden, und wobei die Schritte (iii) bis (vi) für alle Kalibrierungskörper (33, 53) durchgeführt werden.

3. Verfahren nach Anspruch 2,
wobei anhand der ermittelten Schnittpunkte die Lage einer Referenzlinie des Überwachungsbereichs (21), vorzugsweise der Längsachse (17) oder Mittellinie des Überwachungsbereichs (21), in dem bezüglich des Trägersystems (14) ortsfesten Koordinatensystem ermittelt wird.

4. Verfahren nach Anspruch 3,
wobei eine Parallelverschiebung und/oder eine Verkippung der Referenzlinie (17) gegenüber einer Koordinatenachse des Koordinatensystems ermittelt wird.

5. Verfahren nach einem der vorstehenden Ansprüche,
wobei im Schritt (ii) der wenigstens eine Kalibrierungskörper (33, 53) derart in dem Überwachungsbereich (21) angeordnet wird, dass die Kanten (41, 42) von oben betrachtet schräg zur Längsachse (17) des Überwachungsbereichs (21) verlaufen.

6. Verfahren nach einem der vorstehenden Ansprüche,
wobei im Schritt (i) wenigstens ein quaderförmiger Kalibrierungskörper (33) bereitgestellt wird.

7. Verfahren nach einem der Ansprüche 1 bis 5,
wobei im Schritt (i) wenigstens ein Kalibrierungskörper (53) bereitgestellt wird, der zumindest in einem Bereich einen L-förmigen Querschnitt aufweist, wobei der wenigstens eine Kalibrierungskörper (53) im Schritt (ii) derart angeordnet wird, dass die L-Form von oben betrachtet erkennbar ist.

8. Verfahren nach einem der vorstehenden Ansprüche,
wobei im Schritt (i) wenigstens ein Kalibrierungskörper (33, 53) bereitgestellt wird, der eine Länge von wenigstens 50 cm, eine Breite von wenigstens 20 cm und/oder eine Höhe von wenigstens 50 cm aufweist.

9. Vorrichtung (25) zum Überwachen eines länglichen Überwachungsbereichs (21), mit einem Trägersystem (14) und wenigstens einem LiDAR-Sensor (27), der oberhalb des Überwachungsbereichs (21) an dem Trägersystem (14) angeordnet ist und dazu ausgebildet ist, innerhalb mehrerer zueinander versetzter Abtastebenen (29) mittels eines Lichtlaufzeitverfahrens Objekte zu erfassen, wobei sich die Abtastebenen (29) zumindest im Wesentlichen parallel zu einer Längsachse (17) des Überwachungsbereichs (21) erstrecken, wobei die Vorrichtung (25) eine elektronische Steuereinrichtung (65) umfasst, die mit dem wenigstens einen LiDAR-Sensor (27) in Signalverbindung steht und dazu ausgebildet ist,
die Verläufe von zwei in einem Eckpunkt (43, 63) zusammenlaufenden Kanten (41, 42) eines im Überwachungsbereich (21) angeordneten Kalibrierungskörpers (33, 53) anhand der mittels des LiDAR-Sensors (27) bestimmten Positionen der Kanten (41, 42) innerhalb wenigstens zweier Abtastebenen (29) zu ermitteln,
anhand der ermittelten Verläufe den Schnittpunkt der Kanten (41, 42) in einem bezüglich des Trägersystems (14) ortsfesten Koordinatensystem zu ermitteln, und
anhand des ermittelten Schnittpunkts eine Referenzposition des Überwachungsbereichs (21) in dem bezüglich des Trägersystems (14) ortsfesten Koordinatensystem zu ermitteln.

10. Vorrichtung nach Anspruch 9,
wobei das Trägersystem (14) das Basisgestell eines Portalkrans (13), insbesondere eines Intermodal-Krans, ist.

11. Vorrichtung nach Anspruch 10,
wobei der Überwachungsbereich (21) ein rechteckiger Zugangsstreifen zwischen zwei Ladebereichen (16) ist.

12. Vorrichtung nach einem der Ansprüche 9 bis 11,
wobei die Abtastebenen (29) einen gleichmäßigen oder ungleichmäßigen Winkelversatz zueinander aufweisen.
